# EUROPÄISCHE PATENTSCHRIFT

(11) **EP 0 445 399 B1**
(45) Veröffentlichungstag und Bekanntmachung des Hinweises auf die Patenterteilung: **16.06.1993**
(21) Anmeldenummer: 90124409.5
(22) Anmeldetag: 17.12.1990
(51) Int. Cl.: F02D 11/06, F02M 3/06

(54) **Hydraulische Steuereinrichtung für die Drosselklappe der Brennkraftmaschine eines Kraftfahrzeugs**
Hydraulic control device for the throttle of the internal combustion engine of a vehicle
Dispositif de commande hydraulique pour le papillon d'un moteur à combustion interne pour véhicule

(30) Priorität: 08.03.1990 DE 4007266
(43) Veröffentlichungstag der Anmeldung: 11.09.1991
(73) Patentinhaber: ROBERT BOSCH GMBH, 70442 Stuttgart (DE)
(72) Erfinder: Schleuter, Willibert, Dr.-Ing., W-7120 Bietigheim-Bissingen (DE); Ahner, Peter, Dipl.-Ing., W-7140 Ludwigsburg-Ossweil (DE); Schustek, Siegfried, Dr.-Ing., W-7257 Ditzingen (DE)

(56) Entgegenhaltungen:
- DE-A- 2 047 470
- GB-A- 1 043 605
- US-A- 3 459 131
- US-A- 3 705 685

## Beschreibung

Die Erfindung geht aus von einer hydraulischen Steuereinrichtung nach der Gattung des Hauptanspruchs. Bei derartigen Steuereinrichtungen kommt es vor, daß durch den Laststoß der Servolenkungspumpe auf die Brennkraftmaschine bei plötzlichen, hohen Lenkmomentanforderungen im Leerlauf befindliche Brennkraftmaschinen mit kleinem Hubraum abgestellt werden können. Als untere Hubraumgrenze für den Einsatz von hydraulischen Servolenkungen galten daher bisher etwa 1600 ccm. Auch der bei der Mono-Jetronic eingeführte Eingriff auf die Drosselklappe zur Leerlauf-Drehzahlstabilisierung konnte diese Grenze nicht wesentlich verschieben, da das Moment der Brennkraftmaschine nach dem Öffnen der Drosselklappe verzögert ansteigt.

Aus der US-PS 3 705 685 ist ein Leerlaufregler und Drosselklappensteller für Brennkraftmaschinen mit einer hydraulischen Stelleinrichtung bekannt. Mit dieser hydraulischen Stelleinrichtung soll ein relativ gleichmäßiger und konstanter Leerlauf der Brennkraftmaschine eingestellt werden, auch wenn zusätzlich angetriebene Verbraucher von der Brennkraftmaschine angetrieben werden. Darüberhinaus soll unter bestimmten Betriebsbedingungen mit der hydraulischen Stelleinrichtung die Schließbewegung der Drosselklappe bei deren manueller Rückstellung verlangsamt werden. Dazu ist die Drosselklappe mechanisch mit der Membran eines Druckübertragers verbunden. Diese Membran ist auf ihrer der Drosselklappe zugewandten Seite mit Atmosphärendruck beaufschlagt und wirkt mit einer Druckfeder zusammen. Die abgewandte Membranseite ist über ein Dämpfungsventil mit der Rücklaufleitung einer Pumpe für eine Servolenkeinrichtung verbunden. Bei Drehzahlen der Brennkraftmaschine oberhalb der Leerlaufdrehzahl ist der Druck in der Rücklaufleitung hoch genug, um die Membran des Druckübertragers so zu belasten, daß die mechanische Verbindung zwischen dieser und der Drosselklappe keinen Einfluß auf deren Stellbewegung hat. Im Leerlaufbetrieb der Brennkraftmaschine sinken sowohl der Volumenstrom als auch der Druck in der Rücklaufleitung. Dadurch verringert sich die Druckbeaufschlagung der Membran, so daß die Membran sich aufgrund der Federdruckbeaufschlagung so verschiebt, daß die mechanische Verbindung zwischen dieser und der Drosselklappe wirksam wird. Damit erfolgt dann eine Drosselklappenstellung in Abhängigkeit vom Rücklaufdruck zur Pumpe der Servolenkeinrichtung. Mit einer derartigen Einrichtung ist zwar ein Anheben der Leerlaufdrehzahl möglich, aufgrund der Trägheit eines derartigen Druckübertragers ist jedoch ein kurzfristiges Absenken der Leerlaufdrehzahl und damit ein Abwürgen der Brennkraftmaschine, insbesondere bei kleinvolumiger Bauweise, nicht immer wirkungsvoll zu verhindern.

### Vorteile der Erfindung

Die erfindungsgemäße hydraulische Steuereinrichtung mit den kennzeichnenden Merkmalen des Hauptanspruchs hat demgegenüber den Vorteil, daß auch bei Fahrzeugen mit kleinvolumigen Brennkraftmaschinen, insbesondere bis 1100 ccm, eine hydraulische Servolenkung eingebaut werden kann, wobei bei deren Betätigung die Brennkraftmaschine nicht abgewürgt wird.

Weitere Vorteile der Erfindung ergeben sich aus den Unteransprüchen.

### Zeichnung

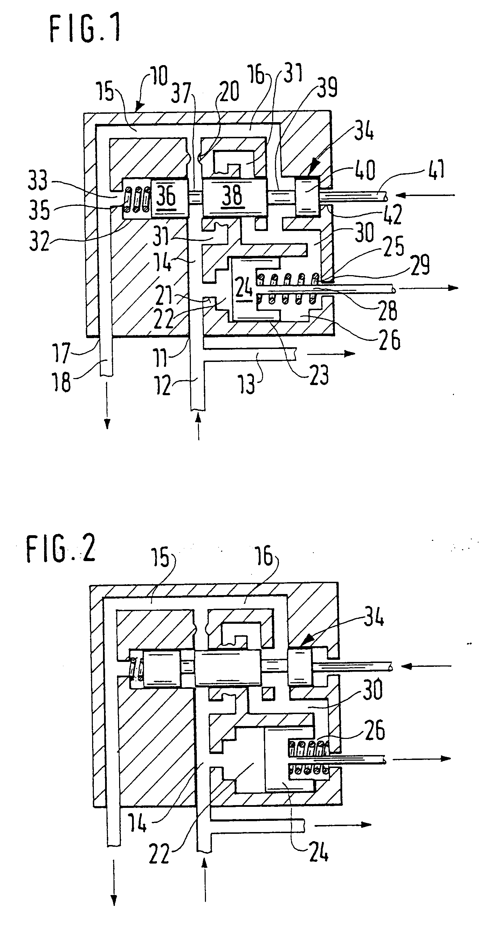

Ein Ausführungsbeispiel der Erfindung ist in der nachfolgenden Beschreibung und Zeichnung wiedergegeben. Letztere zeigt in den Figuren 1 bis 3 je einen Längsschnitt durch eine hydraulische Steuereinrichtung in drei verschiedenen Schaltstellungen.

### Beschreibung des Ausführungsbeispiels

In den Figuren ist mit 10 ein Gehäuse bezeichnet, das einen Einlaß 11 hat, an den eine Pumpenförderleitung 12 angeschlossen ist. Von der Förderleitung 12 zweigt vor dem Gehäuse 10 eine Leitung 13 ab, die zu einer hydraulischen Servolenkung führt. Vom Einlaß 11 verläuft ein Kanal 14 ins Gehäuseinnere und verzweigt sich an seinem Ende in zwei entgegengesetzt verlaufende Kanäle 15, 16. Der Kanal 15 führt zu einem Gehäuseauslaß 17, an welchem eine Leitung 18 angeschlossen ist, die in den Tank mündet. Kurz vor der Mündung des Kanals 14 in die Zweigkanäle 15, 16 ist in ersterem eine Drossel 20 ausgebildet.

Im unteren Teil des Gehäuses 10 geht vom Kanal 14 eine Stichbohrung 21 aus, die in einen zylindrischen Raum 22 mündet, welcher in eine Bohrung 23 mit wesentlich größerem Durchmesser übergeht. In der Bohrung 23 ist ein Kolben 24 dicht gleitend geführt, der sich entgegen der Kraft einer Druckfeder 25 in einen Raum 26 als Teil der Bohrung 23 hineinzubewegen vermag. Der Kolben 24 hat an seiner dem Kanal 14 entgegengesetzten Seite einen langen, mittigen Fortsatz 28, der durch eine Gehäusebohrung 29 abgedichtet nach außen dringt und zur Betätigung der Drosselklappe der Brennkraftmaschine dient. In den Raum 26 dringt ein Kanal 30 ein, der einerseits mit dem Kanal 16 in Verbindung steht und der andererseits in einen Kanal 31 übergeht, welcher etwas oberhalb der Stichbohrung 21 ebenfalls in den Kanal 14 mündet. Die Kanäle 14 und 31 sind im oberen Teil des Gehäuses 10 von einer Gehäusebohrung 32 durchdrungen - sie ist wesentlich vereinfacht dargestellt - deren linke Seite über eine Stichbohrung 33 an den Kanal 15 angeschlossen ist. In der Gehäusebohrung 32 ist ein Steuerschieber 34 dicht gleitend geführt. Auf ihn wirkt von der linken Seite her eine Reglerfeder 35 ein, auf der kein Flüssigkeitsdruck herrscht. Der Steuerschieber hat einen linken Bund 36, dem eine Ringnut 37 folgt, darauf ein Bund 38, darauf wieder eine längliche Ringnut 39 und zum Schluß ein Bund 40, an den sich ein Stößel 41 anschließt, der durch eine Gehäusebohrung 42 nach außen dringt. Über den Stößel 41 wird in irgendeiner Form die Drehzahl der Brennkraftmaschine als längs des Steuerschiebers wirkende Bewegungskraft eingebracht, z. B. über einen Motordrehzahlsensor mit Auswerteelektronik und Elektromagnet oder direkt vom Schmierölpumpendruck, der im Bereich des Motorleerlaufs mit der Drehzahl stark ansteigt.

Wenn die nicht dargestellte Pumpe Druckmittel in die Förderleitung 12 verdrängt, so fließt dieses einerseits über die Leitung 13 in Richtung zur hydraulischen Lenkeinrichtung, andererseits über den Einlaß 11 in den Kanal 14. Es erfolgt nun in der in Figur 1 dargestellten Stellung des Steuerschiebers 34 ein Bypass-Strom über die Drossel 20 und den Kanal 15 und die Leitung 18 zum Tank. Solange die Drehzahl der Brennkraftmaschine unterhalb der Drehzahlschranke n₁ > n₁₁ (Leerlaufdrehzahl) liegt, ermöglicht der Steuerschieber 34 diesen Bypass-Strom zum Tank und schließt den Zufluß über den Kanal 31 zum Kanal 30 und damit zum Raum 26, so daß der Kolben 24 mit dem durch die Drossel 20 gebildeten Differenzdruck und der Reglerfeder 25 in seiner linken Endstellung, in welcher keine Leerlaufdrehzahlanhebung erfolgt, gehalten wird. Der Kolben 24 für die Drosselklappenverstellung ist mit einem geeigneten Gestänge mit dem Leerlaufanschlag der Drosselklappe der Brennkraftmaschine verbunden.

Bei Anforderung eines Servo-Lenkmoments, d. h. bei Betätigen der Servolenkung, wird der Druckmittelstrom zum Lenkventil im Lenkventil an der Lenksäule gedrosselt. Der Pumpendruck steigt nun vom Neutralumlaufdruck von ca. 5 bar nur wenig auf beispielsweise etwa 10 bar an (anstatt etwa 80 bar bei voller Servoanforderung). Der geringe Druckanstieg senkt die Leerlaufdrehzahl der Brennkraftmaschine kaum ab. Er reicht jedoch aus, den Kolben 24 entgegen der Kraft der Reglerfeder 25 und damit auch den Leerlaufanschlag der Drosselklappe zu verschieben.

Es sei nun auf die Figur 2 verwiesen. Abhängig von der Brennkraftmaschine, nach ca. 200 bis 400 ms, wird die Drehzahlschranke n₁ überschritten. Der Steuerschieber 34 wird nun über den Stößel 41 nach links verschoben und versperrt nun den Bypass (Verbindung vom Kanal 14 zum Kanal 15). Der Zufluß über den Kanal 31 zum Raum 26 am Kolben 24 bleibt dabei abgeschlossen. Nun steigt der Druck im Kanal 14 an und verschiebt den Kolben 24 weit nach rechts, wobei die Leerlaufdrehzahl der Brennkraftmaschine angehoben wird, ohne deren Drehzahl wieder auf die Schranke n₁ zurückzusetzen. Somit wird erreicht, daß der Pumpendruck erst weiter ansteigen kann, wenn die Motordrehzahl ausreichend angehoben ist. Da der Weg des Kolbens 24 begrenzt ist, ist auch die Anhebung der Motordrehzahl um z. B. 100 bis 200 U/min begrenzt, was die Sicherheit des Fahrbetriebs nicht gefährdet. Ein um 200 bis 400 ms verzögerter Einsatz des Servo-Lenkmoments kann im Parkbetrieb akzeptiert werden.

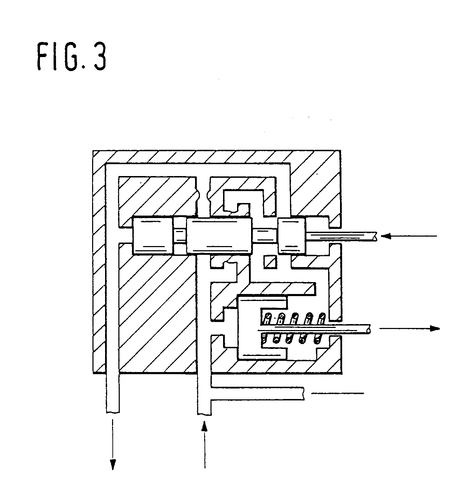

Es wird nun auf die Figur 3 verwiesen. Damit im Fahrbetrieb die obengenannte Zeitverzögerung des Lenkmomentenanstiegs nicht auftritt und im Schubbetrieb das Bremsmoment der Brennkraftmaschine durch das Lenken nicht beeinflußt wird, geht der Kolben 24 oberhalb einer Motordrehzahl n₂ > n₁ in seine zweite Endstellung (ganz nach links wie in Figur 1). Dies ist möglich, da durch die angestiegene Motordrehzahl der Steuerschieber 34 noch weiter nach links verschoben worden ist, so daß nun aus dem Kanal 14 über die Kanäle 31 und 30 Druckmittel in den Raum 26 eindringen kann. Nun sind also beide Seiten des Kolbens 24 vom gleichen Druck beaufschlagt, da jedoch seine rechte Seite federbelastet ist, gelangt er in die genannte Endstellung. Auf diese Weise wird die Verschiebung des Drosselklappenanschlags bei höheren Motordrehzahlen nicht wirksam. Daraus ist zu erkennen, daß bei der beschriebenen Einrichtung der starke Laststoß von der Servopumpe auf die Brennkraftmaschine so lange zurückgehalten wird, bis die Drehzahlanhebung die Brennkraftmaschine größere Laststöße verkraften läßt.

## Patentansprüche

1. Hydraulische Steuereinrichtung für die Drosselklappe der Brennkraftmaschine eines Kraftfahrzeugs, welche Steuereinrichtung einen Kolben (24) aufweist, der zur Betätigung der Drosselklappe dient, der über eine Druckleitung (12, 14, 21) von einer Pumpe beaufschlagt wird, wobei von der Druckleitung eine Zuleitung (13) zu einer Servolenkeinrichtung des Fahrzeugs abzweigt, dadurch gekennzeichnet, daß der Kolben (24) von zwei Druckräumen (22, 26) her beaufschlagbar ist, nämlich einem ersten Druckraum (22), der direkt an der Pumpenhochdruckseite liegt, und einem zweiten Druckraum (26) auf der gegenüberliegenden Seite, von wo aus auch eine Druckfeder (25) auf den Kolben (24) einwirkt, und daß der Druck in diesem zweiten Druckraum (26) über einen Steuerschieber (34) fortgepflanzt wird, der proportional zur Drehzahl der Brennkraftmaschine betätigt wird und der auch eine eine Drossel (20) enthaltende Bypassverbindung (14, 15) von der Pumpenhochdruckseite zum Tank steuert.

2. Einrichtung nach Anspruch 1, dadurch gekennzeichnet, daß der Druck in der Zuleitung (13) zur Servolenkeinrichtung bei Anforderung eines Servo-Lenkmomentes erst ansteigen kann, wenn nach Anhebung der Leerlaufdrehzahl über eine erste Schranke der Zulaufkanal (14) zum Rücklauf (15) über den Steuerschieber (34) abgesperrt wird.

3. Einrichtung nach Anspruch 1 oder 2, dadurch gekennzeichnet, daß der Hochdruckkanal (14) sich im Gehäuse hinter der Drossel (20) in zwei Kanäle (15, 16) verzweigt, von denen der eine zum Tank führt, der andere über das Steuerventil (34) zum Druckraum (26).

4. Einrichtung nach Anspruch 1 bis 3, dadurch gekennzeichnet, daß der Kolben (24) über ein geeignetes Gestänge (41) mit dem Leerlaufanschlag der Drosselklappe der Brennkraftmaschine verbunden ist.

5. Einrichtung nach einem der Ansprüche 1 bis 4, dadurch gekennzeichnet, daß der Steuerschieber (34) über einen Motordrehzahlsensor mit Auswerteelektronik und Elektromagnet betätigt wird oder direkt vom Schmierölpumpendruck, der im Bereich des Leerlaufs der Brennkraftmaschine mit deren Drehzahl ansteigt.

6. Einrichtung nach einem der Ansprüche 1 bis 5, dadurch gekennzeichnet, daß auf den Steuerschieber (34) entgegen der von der Motordrehzahl herrührenden Kraft eine Reglerfeder (35) einwirkt.

7. Einrichtung nach einem der Ansprüche 1 bis 6, dadurch gekennzeichnet, daß bei einer Motordrehzahl über einer zweiten Schranke der Steuerschieber (34) in eine zweite Endstellung geht und somit eine Beeinflussung zwischen Motordrehzahl und Lenkmomentenanforderung vermieden wird.

## Claims

1. Hydraulic control device for the throttle butterfly of the internal combustion engine of a motor vehicle, which control device has a piston (24) which is used for actuating the throttle butterfly and is subjected to a pump via a pressure conduit (12, 14, 21), a supply (13) branching off from the pressure conduit to a power-assisted steering device of the vehicle, characterised in that the piston (24) can be subjected to two pressure spaces (22, 26), namely a first pressure space (22), which is located directly at the pump high-pressure end, and a second pressure space (26) on the opposite end, whence a compression spring (25) also acts on the piston (24), and in that the pressure in this second pressure space (26) is propagated via a control spool (34) which is actuated in proportion to the rotational speed of the internal combustion engine and which also controls a by-pass connection (14, 15), containing a throttle (20), from the pump high-pressure end to the tank.

2. Device according to Claim 1, characterised in that the pressure in the supply (13) to the power-assisted steering device can only rise on demand for a power-assisted steering torque if, after the idling rotational speed has been raised above a first barrier, the flow passage (14) to the return (15) is shut off by means of the control spool (34).

3. Device according to Claim 1 or 2, characterised in that the high pressure passage (14) branches, in the housing behind the throttle (20), into two passages (15, 16) of which one leads to the tank and the other leads to the pressure space (26) via the control valve (34).

4. Device according to Claim 1 to 3, characterised in that the piston (26) is connected to the idling stop of the throttle butterfly of the internal combustion engine by means of a suitable linkage (41).

5. Device according to one of Claims 1 to 4, characterised in that the control spool (34) is actuated by an engine rotational speed sensor by means of analysis electronics and electromagnet or directly from the lubricating oil pump pressure which, in the idling range of the internal combustion engine, increases with the rotational speed of the latter.

6. Device according to one of Claims 1 to 5, characterised in that a control spring (35) acts on the control spool (34) against the force derived from the engine rotational speed.

7. Device according to one of Claims 1 to 6, characterised in that in the case of an engine rotational speed above a second barrier, the control spool (34) moves into a second end position and, by this means, any influence between engine rotational speed and steering torque demand is avoided.

## Revendications

1. Dispositif de commande hydraulique pour le clapet d'étranglement du moteur à combustion interne d'un véhicule automobile, ce dispositif de commande comportant un piston (24) servant à actionner le clapet d'étranglement et qui est sollicité par une pompe par l'intermédiaire d'une canalisation de refoulement (12, 14, 21), tandis qu'à partir de cette canalisation de refoulement, une canalisation d'alimentation (13) bifurque vers un dispositif de direction assistée du véhicule, dispositif de commande hydraulique caractérisé en ce que le piston (24) est susceptible d'être sollicité à partir de deux chambres de pression (22, 26), à savoir une première chambre de pression (22) qui se situe directement sur le côté haute pression de la pompe, et une seconde chambre de pression (26) sur le côté opposé, à partir duquel agit également sur le piston (24) un ressort de pression (25), et en ce que la pression est propagée dans cette seconde chambre de pression (26) par l'intermédiaire d'un tiroir de commande (34), qui est actionné proportionnellement à la vitesse de rotation du moteur à combustion interne et qui commande également une liaison de dérivation (14, 15), contenant un étranglement (20), et partant du côté haute pression de la pompe vers le réservoir.

2. Dispositif selon la revendication 1, caractérisé en ce que la pression dans la canalisation d'alimentation (13) vers le dispositif de direction assistée, ne peut augmenter lorsqu'un couple est demandé pour la direction assistée que lorsque, après accentuation de la vitesse de rotation au ralenti au-delà d'une première limite, le canal d'amenée (14) au retour (15) est fermé par l'intermédiaire du tiroir de commande (34).

3. Dispositif selon la revendication 1 ou la revendication 2, caractérisé en ce que le canal haute pression (14) se ramifie dans le carter derrière l'étranglement (20) en deux canaux (15, 16) dont l'un aboutit au réservoir, tandis que l'autre aboutit, par l'intermédiaire de la vanne de commande (34) à la chambre de pression (26).

4. Dispositif selon l'une des revendications 1 à 3, caractérisé en ce que le piston (24) est relié par l'intermédiaire d'une tringlerie appropriée (41) à la butée de ralenti du clapet d'étranglement du moteur à combustion interne.

5. Dispositif selon l'une des revendications 1 à 4, caractérisé en ce que le tiroir de commande (34) est actionné par l'intermédiaire d'un détecteur de vitesse de rotation du moteur avec électronique d'exploitation et électro-aimant, ou bien directement par la pression de la pompe d'huile de lubrification qui, au voisinage du ralenti du moteur à combustion interne, augmente avec la vitesse de rotation du moteur.

6. Dispositif selon l'une des revendications 1 à 5, caractérisé en ce qu'un ressort de réglage (35) agit sur le tiroir de commande (34) contre l'effort provenant de la vitesse de rotation du moteur.

7. Dispositif selon l'une des revendications 1 à 6, caractérisé en ce que, pour une vitesse de rotation du moteur dépassant une seconde limite, le tiroir de commande (34) va dans une seconde position terminale et qu'ainsi une influence entre la vitesse de rotation du moteur et la demande d'un couple directionnel est évitée.
